# EUROPÄISCHE PATENTANMELDUNG

(11) **EP 3 663 726 A1**
(43) Veröffentlichungstag der Anmeldung: **10.06.2020**
(21) Anmeldenummer: 19200365.5
(22) Anmeldetag: 30.09.2019
(51) Int. Cl.: G01F 1/115, G01F 1/24

(54) **VORRICHTUNG UND VERFAHREN ZUR VOLUMENSTROMMESSUNG EINES STRÖMENDEN MEDIUMS**

(30) Priorität: 28.09.2018 DE 102018216802
(71) Anmelder: Robert Bosch GmbH, 70442 Stuttgart (DE)
(72) Erfinder: Schwaiger, Andreas, 83417 Kirchanschoering (DE); Loser, Florian, 83022 Rosenheim (DE); Englisch, Christian, 83324 Ruhpolding (DE)

(57) **Zusammenfassung**

Die Erfindung geht aus von einer Vorrichtung zur Volumenstrommessung eines strömenden Mediums, insbesondere zur Verwendung in Haushalts- und/oder Warmwassergeräten, mit zumindest einem Volumenstromsensor und mit zumindest einem Messkörper, wobei der Volumenstromsensor zumindest einen Schwingkreis zur zumindest im Wesentlichen kontinuierlichen Erzeugung und Erfassung eines Magnetfelds aufweist und wobei der Messkörper dazu vorgesehen ist, das Magnetfeld durch zumindest eine Bewegung zumindest signifikant zu beeinflussen.

Es wird vorgeschlagen, dass der Messköper derart angeordnet ist, dass eine Bewegungsachse des Messkörpers zumindest im Wesentlichen parallel zu einer Strömungsrichtung des Mediums ausgerichtet ist.

## Beschreibung

### Stand der Technik

Es sind bereits eine Vorrichtung und ein Verfahren zur Volumenstrommessung eines strömenden Mediums, insbesondere zur Verwendung in Haushalts- und/oder Warmwassergeräten, mit einem Volumenstromsensor und einem Messkörper vorgeschlagen worden, wobei der Volumenstromsensor zumindest einen Schwingkreis zur kontinuierlichen Erzeugung und Erfassung eines Magnetfelds aufweist und wobei der Messkörper dazu vorgesehen ist, das Magnetfeld durch zumindest eine Bewegung zumindest signifikant zu beeinflussen.

### Offenbarung der Erfindung

Die Erfindung geht aus von einer Vorrichtung zur Volumenstrommessung eines strömenden Mediums, insbesondere zur Verwendung in Haushalts- und/oder Warmwassergeräten, mit zumindest einem Volumenstromsensor und mit zumindest einem Messkörper, wobei der Volumenstromsensor zumindest einen Schwingkreis zur zumindest im Wesentlichen kontinuierlichen Erzeugung und Erfassung eines Magnetfelds aufweist und wobei der Messkörper dazu vorgesehen ist, das Magnetfeld durch zumindest eine Bewegung zumindest signifikant zu beeinflussen.

Es wird vorgeschlagen, dass der Messköper derart angeordnet ist, dass eine Bewegungsachse des Messkörpers zumindest im Wesentlichen parallel zu einer Strömungsrichtung des Mediums ausgerichtet ist. Unter "zumindest im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Unter einer "Bewegungsachse" soll insbesondere eine Achse verstanden werden, entlang und/oder um die ein Element und/oder eine Einheit bewegbar ist, insbesondere infolge einer beweglichen Lagerung des Elements und/oder der Einheit und/oder infolge einer physischen Führung des Elements und/oder der Einheit. Vorzugsweise ist die Bewegungsachse als eine Translationsachse ausgebildet, insbesondere bei einer Ausgestaltung des Messkörpers als ein Schwebkörper. Vorteilhafterweise ist die Bewegungsachse als eine Rotationsachse ausgebildet, insbesondere bei einer Ausgestaltung des Messkörpers als Flügelrad, als Turbinenrad o. dgl.

Vorzugsweise ist die Vorrichtung zur Volumenstrommessung zu einer Verwendung in Haushalts- und/oder Warmwassergeräten, insbesondere Kaffeemaschinen, Showerheatern, Löschanlagen, Waschmaschinen, Spülmaschinen, Dampfkesseln und/oder Durchlauferhitzern vorgesehen. Es ist jedoch auch denkbar, dass die Vorrichtung zur Volumenstrommessung in weiteren, einem Fachmann bekannten Haushalts- und/oder Warmwassergeräten verwendet wird. Insbesondere ist die Vorrichtung zur Volumenstrommessung eines strömenden Mediums dazu vorgesehen, über die kontinuierliche Erzeugung und Messung des Magnetfelds, insbesondere induktiv, eine Bewegungskenngröße des Messkörpers in einem strömenden Medium zu bestimmen, insbesondere um zumindest einen Volumenstrom des Mediums zu ermitteln. Insbesondere erfolgt, insbesondere bei einer Ausgestaltung der Vorrichtung, eine translatorische Bewegung des Messkörpers entlang der Bewegungsachse des Messkörpers. Insbesondere erfolgt, insbesondere bei einer alternativen Ausgestaltung der Vorrichtung, eine Rotation des Messkörpers um die Bewegungsachse, die insbesondere als Rotationsachse ausgebildet ist.

Bevorzugt ist die Vorrichtung zur Volumenstrommessung eines strömenden Mediums zumindest größtenteils, insbesondere bis auf den Messkörper, außerhalb eines vom Medium durchströmten Raums angeordnet. Vorzugsweise verläuft die Bewegungsachse des Messkörpers zumindest im Wesentlichen parallel zu zumindest einer Innenwand des vom Medium durchströmten Raums. Insbesondere ist zumindest der Schwingkreis des Volumenstromsensors zumindest im Wesentlichen an und/oder um den vom Medium durchströmten Raum angeordnet. Es ist aber auch denkbar, dass zumindest der Schwingkreis des Volumenstromsensors in dem vom Medium durchströmten Raum angeordnet ist. Insbesondere ist der vom strömenden Medium durchströmte Raum als Rohr, Kanal, Gehäuse und/oder Gehäuseelement ausgebildet. Es sind jedoch auch andere, einem Fachmann bekannte Formen des von dem Medium durchströmten Raums denkbar. Vorteilhafterweise ist zumindest der Messkörper im vom Medium durchströmten Raum angeordnet. Bevorzugt ist der Schwingkreis des Volumenstromsensors in einem Bereich entlang einer Strömungsrichtung des Mediums an und/oder um den von dem Medium durchströmten Raum angeordnet, in dem bevorzugt der Messkörper angeordnet ist.

Unter "vorgesehen" soll insbesondere speziell programmiert, speziell eingerichtet, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter "zumindest im Wesentlichen" soll insbesondere verstanden werden, dass eine Abweichung von einem vorgegebenen Wert insbesondere weniger als 25%, vorzugsweise weniger als 10% und besonders bevorzugt weniger als 5% des vorgegebenen Werts abweicht. Unter einer "zumindest im Wesentlichen kontinuierlichen Erzeugung und Erfassung eines Magnetfelds" soll insbesondere verstanden werden, dass das Magnetfeld über eine Zeitspanne erzeugt und erfasst wird, die insbesondere mehr als 75%, vorzugsweise mehr als 90% und besonders bevorzugt mehr als 95% von einer Betriebszeit des Verfahrens beträgt. Insbesondere erfolgt die Erzeugung und Erfassung des Magnetfelds kontinuierlich über die komplette Dauer einer Betriebszeit. Darunter, dass das erzeugte Magnetfeld von einer Bewegung des Messkörpers zumindest signifikant beeinflusst wird, soll in diesem Zusammenhang insbesondere verstanden werden, dass das Magnetfeld durch eine minimal zu erwartende Bewegung des Messkörpers derart verändert wird, dass eine Messung eines dadurch induzierten Signals im Schwingkreis des Volumenstromsensors mittels des Volumenstromsensors zumindest im Wesentlichen vollständig erfasst werden kann.

Vorzugsweise ist der Schwingkreis insbesondere als eine resonanzfähige Schaltung ausgebildet, die zumindest eine Spule, zumindest einen Kondensator und zumindest einen Widerstand in einem geschlossenen Stromkreis umfasst. Insbesondere ist der Widerstand aus einem Widerstand der Leitungen des Stromkreises gebildet. Es ist jedoch auch denkbar, dass der Schwingkreis einen separat ausgebildeten Widerstand umfasst. Insbesondere ist auch ein Schwingkreis ohne einen Kondensator denkbar. Bevorzugt wird der Schwingkreis des Volumenstromsensors durch Anlegen einer Wechselspannung zu elektromagnetischen Eigenschwingungen angeregt. Vorteilhafterweise fließt aufgrund der Eigenschwingungen ein elektrischer Strom durch die Spule, wodurch ein Magnetfeld erzeugt wird. Insbesondere wird durch die zeitlich veränderliche Natur der Wechselspannung ein zeitlich veränderliches Magnetfeld erzeugt. Insbesondere wird durch das zeitlich veränderliche Magnetfeld in der Spule eine Spannung induziert, wodurch ein elektrischer Strom im Schwingkreis hervorgerufen wird. Insbesondere wird durch den induzierten Strom eine Erfassung des Magnetfelds ermöglicht. Wird das erzeugte Magnetfeld, beispielsweise durch einen metallischen Körper, beeinflusst, ändert sich die Dämpfung des Schwingkreises und dadurch auch der induzierte Strom beziehungsweise eine anfallende Leistung. Insbesondere wird durch die Spule des Schwingkreises ein induktives Messverfahren ermöglicht.

Vorzugsweise weist die Vorrichtung zur Volumenstrommessung zumindest eine Steuer- und/oder Regeleinheit auf. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Insbesondere ist zumindest die Steuer- und/oder Regeleinheit auf einer Hauptelektronikplatine der Vorrichtung ausgebildet. Insbesondere ist die Steuer- und/oder Regeleinheit dazu vorgesehen, aus dem Ergebnis der Messung zumindest im Wesentlichen kontinuierlich eine Bewegungskenngröße des Messkörpers zu bestimmen. Bevorzugt ist die Steuer- und/oder Regeleinheit dazu vorgesehen, über die bestimmte Bewegungskenngröße des Messkörpers zumindest einen Volumenstrom des Mediums zu ermitteln. Insbesondere ist das Ergebnis der Messung zumindest ein Signal, insbesondere zumindest ein Widerstand, eine Frequenz und/oder ein Spannungs- und/oder Strompegel, das durch eine Bewegung des Messkörpers mittels des Schwingkreises des Volumenstromsensors erzeugt wird. Unter einer "Bewegungskenngröße" soll insbesondere eine Kenngröße verstanden werden, welche eine Bewegung eines Körpers beschreibt. Vorteilhafterweise beschreibt die Bewegungskenngröße zumindest teilweise eine Bewegung des Messkörpers, welche zumindest teilweise einen Volumenstrom eines zu messenden strömenden Mediums beschreibt und/oder eine Bestimmung des Volumenstroms des strömenden Mediums mittels der Steuer- und/oder Regeleinheit ermöglicht. Insbesondere ist die Art der Bewegungskenngröße abhängig von, insbesondere der Form und Anordnung, des Messkörpers. Insbesondere ist die Speichereinheit dazu vorgesehen, das Ergebnis der Messung, die über das Ergebnis der Messung mittels der Steuer- und/oder Regeleinheit bestimmte Bewegungskenngröße des Messkörpers und/oder den ermittelten Volumenstrom des Mediums mittels der Steuer- und/oder Regeleinheit zu speichern. Bevorzugt ist die Speichereinheit zusammen mit der Steuer- und/oder Regeleinheit, insbesondere auf der Hauptelektronikplatine, ausgebildet. Es ist aber auch denkbar, dass die Speichereinheit und die Steuer- und/oder Regeleinheit getrennt voneinander ausgebildet sind und insbesondere kabelgebunden und/oder kabellos miteinander verbunden sind.

Bevorzugt weist die Vorrichtung zur Volumenstrommessung eines strömenden Mediums zumindest eine Ausgabeeinheit auf, welche dazu vorgesehen ist, zumindest das Ergebnis der Messung, die bestimmte Bewegungskenngröße des Messkörpers und/oder den über die Bewegungskenngröße ermittelten Volumenstrom des Mediums mittels zumindest eines akustischen, haptischen und/oder visuellen Signals auszugeben. Insbesondere ist die Ausgabeeinheit dazu vorgesehen, zumindest das Ergebnis der Messung, die bestimmte Bewegungskenngröße des Messkörpers und/oder den über die Bewegungskenngröße ermittelten Volumenstrom des Mediums mittels zumindest eines akustischen, haptischen und/oder visuellen Signals kontinuierlich auszugeben. Außerdem ist die Ausgabeeinheit dazu vorgesehen, bei einer Über- oder Unterschreitung eines in der Speichereinheit hinterlegten, vorgegebenen und/oder einstellbaren Grenzwerts mittels der Ausgabeeinheit zumindest eine akustische, haptische und/oder visuelle Meldung auszugeben, insbesondere um einen Benutzer zu warnen.

Insbesondere weist die Vorrichtung zumindest eine Kommunikationseinheit auf, die dazu vorgesehen ist, eine Ausgabe auf zumindest eine externe Einheit zu übertragen. Insbesondere ist die Kommunikationseinheit dazu vorgesehen, die Vorrichtung mit der externen Einheit kabelgebunden und/oder kabellos zu verbinden. Insbesondere umfasst die Kommunikationseinheit dazu eine Bluetooth-, Infrarot- und/oder Funk-Schnittstelle. Es sind aber auch andere, einem Fachmann bekannte Übertragungsarten denkbar. Bevorzugt ist die Kommunikationseinheit dazu vorgesehen, Daten von der Vorrichtung auf die externe Einheit kontinuierlich zu übertragen. Insbesondere ist die Kommunikationseinheit dazu vorgesehen, bei einer Über- und/oder Unterschreitung des Grenzwerts zumindest ein Signal und/oder eine Ausgabe an eine externe Einheit zu übertragen, insbesondere um einen Benutzer zu warnen und/oder vorzugsweise um einen Volumenstrom des Mediums zu begrenzen. Vorteilhafterweise ist die Steuer- und/oder Regeleinheit kabellos und/oder kabelgebunden mit dem Volumenstromsensor, der Ausgabeeinheit, und/oder der Kommunikationseinheit verbunden.

Durch die erfindungsgemäße Ausgestaltung der Vorrichtung zur Volumenstrommessung kann eine Vorrichtung mit vorteilhaft geringem Strömungswiderstand erreicht werden, insbesondere da die äußere Geometrie des vom Medium durchströmten Raums zumindest im Wesentlichen unverändert bleiben kann. Außerdem kann eine Vorrichtung zur Volumenstrommessung mit einer vorteilhaft hohen Flexibilität in Bezug auf eine Positionierung erreicht werden. Dadurch kann außerdem eine Vorrichtung zur Volumenstrommessung ermöglicht werden, die zumindest im Wesentlichen über einen kompletten Querschnitt quer zur Strömungsrichtung des Mediums messen kann. Dadurch kann weiter eine Vorrichtung mit vorteilhaft erhöhter Funktionalität erreicht werden, da eine Beeinflussung von nicht-metallischen Stoffen im Volumenstrom vermieden wird.

Zudem wird vorgeschlagen, dass der Messkörper als Schwebekörper und/oder als Flügelrad ausgebildet ist. Insbesondere sind jedoch auch weitere Ausgestaltungen des Messkörpers denkbar, wobei eine Translations- und/oder Rotationsbewegung zumindest im Wesentlichen einen Volumenstrom eines zumindest vorbeiströmenden Mediums beschreibt, wie beispielsweise eine Turbine und/oder weitere einem Fachmann bekannte Ausgestaltungen eines Messkörpers. Insbesondere ist im Falle, dass der Messkörper als Schwebekörper ausgebildet ist, die gemessene Bewegungskenngröße zumindest als zumindest eine vom Messkörper aufgrund des Volumenstroms des Mediums zurückgelegte Distanz, insbesondere Schwebehöhe, insbesondere entlang der Bewegungsachse, die zumindest im Wesentlichen parallel zur Strömungsrichtung des Mediums ausgerichtet ist, ausgebildet. Insbesondere ist im Falle, dass der Messkörper als Flügelrad ausgebildet ist, welches aufgrund eines Volumenstroms des Mediums eine Rotationsbewegung ausführt, die gemessene Bewegungskenngröße als Rotationsfrequenz, Rotationsgeschwindigkeit und/oder Winkelgeschwindigkeit ausgebildet. Insbesondere ist die Bewegungsachse des als Flügelrad ausgebildeten Messkörpers zumindest im Wesentlichen parallel zur Strömungsrichtung des Mediums ausgerichtet. Insbesondere ist als Bewegungskenngröße des Messkörpers jede, einem Fachmann bekannte Kenngröße denkbar, die zumindest teilweise einen Volumenstrom des strömenden Mediums beschreibt. Alternativ ist auch denkbar, dass der Messkörper als ein Element einer Pumpe, insbesondere einer Pumpe zur Förderung des Mediums, ausgebildet ist, wobei die Vorrichtung zur Volumenstrommessung bevorzugt zu einer redundanten Überwachung der Pumpe vorgesehen ist, insbesondere um einen von der Pumpe geförderten Volumenstrom zu messen. Vorteilhafterweise ist der Messkörper als Element der Pumpe in Strömungsrichtung des Mediums nach einem Förderelement der Pumpe, insbesondere im vom Medium durchströmten Raum, angeordnet. In dem Falle, dass der Messkörper als ein Element einer Pumpe ausgebildet ist, ist jedoch auch denkbar, dass der Messkörper insbesondere als Pumpenrad, als Pumpenkolben und/oder als Pumpenwalze der Pumpe ausgebildet ist. Mittels der erfindungsgemäßen Ausgestaltung kann eine Vorrichtung zur Volumenstrommessung mit vorteilhaft geringen Kosten und vorteilhaft geringer Komplexität erreicht werden, da bereits vorhandene Bauteile eines Systems als Messkörper für die Vorrichtung zur Volumenstrommessung verwendet werden können.

Des Weiteren wird vorgeschlagen, dass zumindest der Volumenstromsensor getrennt von einer Steuer- und/oder Regeleinheit, insbesondere von einer Hauptelektronikplatine, insbesondere an und/oder um den vom Medium durchströmten Raum, angeordnet ist. Insbesondere ist zumindest der Volumenstromsensor zumindest im Wesentlichen an und/oder um den vom Medium durchströmten Raum angeordnet. Insbesondere ist zumindest der Volumenstromsensor an einer Außenwand des vom Medium durchströmten Raums angeordnet. Bevorzugt ist zumindest der Volumenstromsensor an einer Außenwand des vom Medium durchströmten Raums, insbesondere nicht-leitend, befestigt. Bevorzugt ist die Steuer- und/oder Regeleinheit, insbesondere die Hauptelektronikplatine, derart angeordnet, dass sie zumindest von dem Volumenstromsensor beanstandet ist. Es ist denkbar, dass die Steuer- und/oder Regeleinheit, insbesondere die Hauptelektronikplatine, an einer von der Position des Volumensensors gegenüberliegenden Seite des vom Medium durchströmten Raumes angeordnet ist, insbesondere um eine kompakte Anordnung der Vorrichtung um das vom Medium durchströmte Volumen zu ermöglichen. Vorteilhafterweise ist die Steuer- und/oder Regeleinheit, insbesondere die Hauptelektronikplatine, leitend, insbesondere über zumindest eine Leitungsbahn, zumindest mit dem Volumenstromsensor verbunden. Es ist jedoch auch denkbar, dass die Steuer- und/oder Regeleinheit, insbesondere die Hauptelektronikplatine, drahtlos zumindest mit dem Volumenstromsensor verbunden ist. Durch die erfindungsgemäße Ausgestaltung der Vorrichtung zur Volumenstrommessung kann eine Vorrichtung mit einer vorteilhaft hohen Flexibilität, insbesondere in Bezug auf eine Positionierung der Vorrichtung an einem vom Medium durchströmten Raum, erreicht werden, da die Einbaulage des Volumenstromsensors mehr Freiheitsgrade besitzt, als beispielsweise eine Vorrichtung mit einem auf der Hauptelektronikplatine integrierten Volumenstromsensor. Dadurch kann außerdem der Abstand des Volumenstromsensors zum von dem Medium durchströmten Raum vorteilhaft breiter gewählt werden.

Ferner wird vorgeschlagen, dass der Messkörper mit zumindest einer, aus einem metallischen Material gebildeten Struktur ausgebildet ist. Bevorzugt sind der Messkörper und die aus einem metallischen Material gebildete Struktur vollständig im von dem Medium durchströmten Raum angeordnet. Besonders bevorzugt ist das metallische Material der Struktur unmagnetisch. Es ist jedoch auch denkbar, dass die Struktur aus einem magnetischen Material ausgebildet ist. Bevorzugt ist der Messkörper einstückig mit der aus einem metallischen Material gebildeten Struktur ausgebildet. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren. Insbesondere ist der Messkörper vollständig aus der aus einem metallischen Material gebildeten Struktur ausgebildet. Insbesondere ist die aus einem metallischen Material gebildete Struktur als Beschichtung des Messkörpers ausgebildet. Vorteilhafterweise weist der Messkörper weitere Bereiche auf, welche aus einem Material gebildet sind, welches insbesondere verschieden von dem Material der Struktur ist. Insbesondere sind die weiteren Bereiche des Messkörpers aus einem nicht-metallischen, metallischen, magnetischen und/oder unmagnetischen Material ausgebildet. Insbesondere ist ein Abstand zwischen der aus einem metallischen Material gebildeten Struktur des Messkörpers und dem Volumenstromsensor so gewählt, dass das Magnetfeld durch eine minimal zu erwartende Bewegung der aus einem metallischen Material gebildeten Struktur des Messkörpers derart verändert wird, dass eine Messung eines dadurch induzierten Signals im Schwingkreis des Volumenstromsensors mittels des Volumenstromsensors vollständig erfasst werden kann. Mittels der erfindungsgemäßen Ausgestaltung kann eine Vorrichtung zur Volumenstrommessung mit einer vorteilhaft hohen Funktionalität ermöglicht werden, da die Auflösung durch die Volumenstrommessung erhöht werden kann. Außerdem kann dadurch eine Vorrichtung zur Volumenstrommessung mit vorteilhaft geringen Kosten erreicht werden, da die Herstellung des Messkörpers vereinfacht werden kann und die Kapselung des Messkörpers durch den Einsatz von lebensmittelechten Metallen, insbesondere im Vergleich zu Volumenstrommessungen mittels Reed-Schaltern oder Hall-Sensoren, vermieden werden kann. Weiter kann dadurch eine Vorrichtung zur Volumenstrommessung mit einer vorteilhaft hohen Genauigkeit und geringen Fehleranfälligkeit erreicht werden, da durch eine unmagnetische Struktur am Messkörper eine Anlagerung von metallischen Stoffen am Messkörper sowie eine Signalveränderung durch eine Alterung der Magnete vermieden werden kann.

Zudem wird vorgeschlagen, dass die Vorrichtung zur Volumenstrommessung zumindest eine Signalaufbereitungseinheit aufweist, welche zumindest funktional zwischen dem Volumenstromsensor und einer Steuer- und/oder Regeleinheit, insbesondere auf einer Hauptelektronikplatine, angeordnet ist. Bevorzugt ist die Signalaufbereitungseinheit zumindest teilweise als zumindest eine IDC-Chipkarte (Inductance-to-Digital Converter), insbesondere eine LDC1000-Chipkarte von Texas Instruments®, ausgebildet. Bevorzugt ist die Signalaufbereitungseinheit zumindest leitend mit dem Volumenstromsensor und der Steuer- und/oder Regeleinheit verbunden. Insbesondere ist die Signalaufbereitungseinheit zumindest dazu vorgesehen, zumindest ein ausgegebenes analoges Signal des Volumenstromsensors in zumindest ein digitales Signal umzuwandeln. Insbesondere ist die Signalaufbereitungseinheit zumindest dazu vorgesehen, zumindest nach einer Erfassung des Magnetfelds aus einem erfassten Signal zumindest ein Widerstand, eine Frequenz und/oder ein Spannungs- und/oder Strompegel zu ermitteln und/oder separat auszulesen, insbesondere bevor eine Bewegungskenngröße und/oder ein Volumenstrom des Mediums von der Steuer- und/oder Regeleinheit bestimmt und/oder ermittelt wird. Durch eine erfindungsgemäße Ausgestaltung kann eine Vorrichtung zur Volumenstrommessung mit einem kontinuierlichen induktiven Messverfahren erreicht werden. Dadurch kann eine Vorrichtung mit vorteilhaft erhöhter Funktionalität und Messgenauigkeit ermöglicht werden. Weiter kann dadurch eine Vorrichtung mit einer vorteilhaft schnellen Volumenstrommessung erreicht werden.

Des weiteren wird ein Verfahren zur Volumenstrommessung eines strömenden Mediums vorgeschlagen, insbesondere mittels einer erfindungsgemäßen Vorrichtung, wobei in zumindest einem Verfahrensschritt mittels zumindest eines Schwingkreises zumindest eines Volumenstromsensors ein Magnetfeld zumindest im Wesentlichen kontinuierlich erzeugt und erfasst wird, wobei in zumindest einem Verfahrensschritt das erzeugte Magnetfeld durch eine Bewegung von zumindest einer aus einem metallischen Material gebildeten Struktur zumindest eines Messkörpers zumindest signifikant beeinflusst wird und wobei in zumindest einem Verfahrensschritt über das Ergebnis einer Messung mittels zumindest einer Steuer und/oder Regeleinheit kontinuierlich zumindest eine Bewegungskenngröße zumindest eines Messkörpers bestimmt wird.

Es wird vorgeschlagen, dass die Bewegung der aus einem metallischen Material gebildeten Struktur des Messkörpers entlang und/oder um die Bewegungsachse erfolgt, die zumindest im Wesentlichen parallel zu einer Strömungsrichtung des Mediums ausgerichtet ist.

Das Verfahren ist vorzugsweise zur Volumenstrommessung eines strömenden Mediums in Haushalts- und/oder Warmwassergeräten vorgesehen. Insbesondere ist das Verfahren durch ein Betriebsprogramm der Steuer- und/oder Regeleinheit zumindest teilweise ausführbar. Das Verfahren zur Volumenstrommessung ist insbesondere dazu vorgesehen, kontinuierlich eine Bewegungskenngröße eines Messkörpers in einem von einem Medium durchströmten Raum zu bestimmen, um zumindest einen Volumenstrom des Mediums zu ermitteln. Es ist auch denkbar, dass mittels des Verfahrens zumindest eine, von einem Volumenstrom unterschiedliche Eigenschaft, insbesondere eine Temperatur, ein Massedurchsatz und/oder eine Beschaffenheit des Mediums ermittelt wird.

Darunter, dass das erzeugte Magnetfeld von einer Bewegung der aus einem metallischen Material gebildeten Struktur des Messkörpers zumindest signifikant beeinflusst wird, soll in diesem Zusammenhang insbesondere verstanden werden, dass das Magnetfeld durch eine minimal zu erwartende Bewegung der aus einem metallischen Material gebildeten Struktur des Messkörpers derart verändert wird, dass eine Messung eines dadurch induzierten Signals im Schwingkreis des Volumenstromsensors mittels des Volumenstromsensors zumindest im Wesentlichen vollständig erfasst werden kann. Bevorzugt erfolgt die kontinuierliche Erzeugung und Messung des Magnetfelds mittels des Schwingkreises des Volumenstromsensors zumindest im Wesentlichen außerhalb eines von dem Medium durchströmten Raums. Es ist jedoch auch denkbar, dass die kontinuierliche Erzeugung und Messung des Magnetfelds zumindest im Wesentlichen innerhalb des von dem Medium durchströmten Raums erfolgt. Insbesondere ist eine Stärke des Magnetfelds abhängig von den im Schwingkreis des Volumenstromsensors verwendeten Bauteilen, einer zur Verfügung stehenden Spannung, einer Geometrie des von einem den zu messenden Volumenstrom bildenden Medium durchflossenen Raums, einer Geometrie eines Messkörpers und/oder einer Eigenschaft des zu messenden Volumenstroms und wird, insbesondere von einer Steuer- und/oder Regeleinheit, dementsprechend eingestellt und/oder geregelt.

Vorteilhafterweise erfolgt die Bewegung der aus einem metallischen Material gebildeten Struktur des Messkörpers innerhalb des von dem Medium durchströmten Raums. Bevorzugt erfolgt die Bewegung der aus einem metallischen Material gebildeten Struktur des Messkörpers ausschließlich durch eine Krafteinwirkung des strömenden Mediums auf den Messkörper. Insbesondere ist die Art der Bewegung abhängig von einer Form der aus einem metallischen Material gebildeten Struktur des Messkörpers und/oder des Messkörpers. Insbesondere ist die Bewegung eine Translation und/oder Rotation der aus einem metallischen Material gebildeten Struktur des Messkörpers und/oder des Messkörpers, insbesondere mit der Bewegungsachse, welche zumindest im Wesentlichen parallel zur Strömungsrichtung des Mediums ausgerichtet ist. Insbesondere wird durch die Bewegung der aus einem metallischen Material gebildeten Struktur des Messkörpers das vom Schwingkreis des Volumenstromsensors erzeugte Magnetfeld kontinuierlich beeinflusst. Es ist jedoch auch denkbar, dass bei einem unveränderlichen Volumenstrom des Mediums die aus einem metallischen Material gebildete Struktur des Messkörpers stationär vorliegt, wobei insbesondere eine Kalibrierung des Volumenstroms des Mediums in Abhängigkeit von der Position der aus einem metallischen Material gebildeten Struktur des Messkörpers erfolgt. Insbesondere wird durch das metallische, insbesondere unmagnetische, Material der Struktur kein separates Magnetfeld erzeugt. Es ist jedoch auch denkbar, dass die Struktur aus einem magnetischen Material gebildet ist.

Durch die erfindungsgemäße Ausgestaltung des Verfahrens zur Volumenstrommessung kann eine Volumenstrommessung eines strömenden Mediums mit vorteilhaften Eigenschaften hinsichtlich einer Genauigkeit und Zuverlässigkeit erreicht werden, da beispielsweise die Messung unbeeinflusst von nicht-metallischen Stoffen im Medium durchgeführt werden kann. Außerdem ist dadurch der Einsatz von unmagnetischen Stoffen für einen Messkörper möglich, wodurch insbesondere störende Effekte im Medium vermieden werden können, was insbesondere bei einer Verwendung in Wasser- oder Abwasserleitungen aber auch bei spezielleren Anwendungen relevant ist. Durch die erfindungsgemäße Ausgestaltung des Verfahrens zur Volumenstrommessung kann außerdem eine Volumenstrommessung eines strömenden Mediums mit einer vorteilhaft hohen Flexibilität ermöglicht werden, da die Positionierung des Messkörpers ohne eine Anpassung des vom Medium durchströmten Raums erfolgen kann. Dadurch kann beispielsweise ein Haushalts- und/oder Warmwassergerät mit einer vorteilhaft hohen Funktionalität, Kompaktheit und/oder Stabilität ermöglicht werden. Dadurch können bereits vorhandene Bauteile, beispielsweise Turbinen, als Messkörper verwendet werden, wodurch wiederum eine Verringerung der Kosten erreicht werden kann. Mittels der erfindungsgemäßen Ausgestaltung kann eine vorteilhaft schnelle Volumenstrommessung mit einer kontinuierlichen Überwachung erreicht werden. Außerdem kann dadurch eine vorteilhaft hohe Flexibilität und Funktionalität der Volumenstrommessung erreicht werden.

Zudem wird vorgeschlagen, dass in zumindest einem Verfahrensschritt das Ergebnis der Messung und/oder die bestimmte Bewegungskenngröße des Messkörpers mit zumindest einem, in einer Speichereinheit hinterlegten, vorgegebenen und/oder einstellbaren Grenzwert verglichen wird. Insbesondere wird zumindest ein Volumenstrom des strömenden Mediums mit zumindest einem in der Speichereinheit hinterlegten, vorgegebenen und/oder einstellbaren Grenzwert verglichen. Insbesondere wird der in der Speichereinheit hinterlegte, vorgegebene und/oder einstellbare Grenzwert durch einen Benutzer einprogrammiert und/oder gespeichert. Es ist auch denkbar, dass der in der Speichereinheit hinterlegte, vorgegebene und/oder einstellbare Grenzwert durch staatliche und/oder betriebsbedingte Vorgaben bestimmt ist. Es ist außerdem denkbar dass eine/ein, insbesondere zu einem früheren Zeitpunkt bestimmte Bewegungskenngröße und/oder ermittelter Volumenstrom als Grenzwert verwendet werden/wird. Mittels der erfindungsgemäßen Ausgestaltung kann eine vorteilhaft individuelle Überwachung der Volumenstrommessung erreicht werden. Außerdem kann dadurch eine vorteilhaft hohe Flexibilität und Funktionalität der Volumenstrommessung erreicht werden.

Des Weiteren wird vorgeschlagen, dass in zumindest einem Verfahrensschritt über zumindest eine Ausgabeeinheit zumindest das Ergebnis der Messung und/oder die bestimmte Bewegungskenngröße des Messkörpers mittels zumindest eines akustischen, haptischen und/oder visuellen Signals ausgegeben wird. Bevorzugt wird zumindest ein ermittelter Volumenstrom des strömenden Mediums mittels zumindest eines akustischen, haptischen und/oder visuellen Signals ausgegeben. Insbesondere erfolgt die Ausgabe des Ergebnisses der Messung, der bestimmten Bewegungskenngröße des Messkörpers und/oder des ermittelten Volumenstroms des strömenden Mediums über die Ausgabeeinheit mittels zumindest eines akustischen, haptischen und/oder visuellen Signals kontinuierlich. Mittels der erfindungsgemäßen Ausgestaltung kann eine vorteilhaft hohe Flexibilität und Funktionalität der Volumenstrommessung erreicht werden.

Zudem wird vorgeschlagen, dass in zumindest einem Verfahrensschritt bei einer Über- oder Unterschreitung des Grenzwerts mittels zumindest einer Ausgabeeinheit zumindest eine akustische, haptische und/oder visuelle Meldung ausgegeben wird, insbesondere um einen Benutzer zu warnen. Insbesondere erfolgt eine Ausgabe der Meldung, insbesondere zu einer Warnung eines Benutzers, wenn die bestimmte Bewegungskenngröße und/oder der ermittelte Volumenstrom des strömenden Mediums einen entsprechenden Grenzwert über- oder unterschreitet. Mittels der erfindungsgemäßen Ausgestaltung kann eine vorteilhaft individuelle Überwachung der Volumenstrommessung erreicht werden. Außerdem kann dadurch eine vorteilhaft hohe Flexibilität und Funktionalität der Volumenstrommessung erreicht werden.

Ferner wird vorgeschlagen, dass die Ausgabe mittels zumindest einer Kommunikationseinheit auf zumindest einer externen Einheit erfolgt. Insbesondere erfolgt eine Übertragung von der Kommunikationseinheit auf die externe Einheit kabelgebunden und/oder kabellos, insbesondere über eine Bluetooth-, Infrarot- und/oder Funk-Schnittstelle. Es sind aber auch andere, einem Fachmann bekannte Übertragungsarten denkbar. Bevorzugt erfolgt die Übertragung von der Kommunikationseinheit auf die externe Einheit kontinuierlich. Insbesondere wird bei einer Ausgabe einer Information zur Warnung eines Benutzers bei einer Über- oder Unterschreitung des Grenzwerts zumindest ein Signal an die externe Einheit ausgegeben, vorzugsweise um einen Volumenstrom des strömenden Mediums zu begrenzen. Mittels der erfindungsgemäßen Ausgestaltung kann eine vorteilhaft individuelle Überwachung der Volumenstrommessung erreicht werden. Außerdem kann dadurch die Funktionalität der Volumenstrommessung vorteilhaft erhöht werden.

Des Weiteren wird vorgeschlagen, dass in zumindest einem Verfahrensschritt zumindest nach einer Erfassung des Magnetfelds und zumindest vor einer Bestimmung der Bewegungskenngröße aus einem erfassten Signal mittels zumindest einer Signalaufbereitungseinheit zumindest ein Widerstand, eine Frequenz und/oder ein Spannungs- und/oder Strompegel ermittelt und/oder separat ausgelesen wird. Insbesondere ist zumindest ein/e ermittelte/r und/oder separat ausgelesene/r Widerstand, Frequenz und/oder Spannungs- und/oder Strompegel für eine Ermittlung zumindest eines Volumenstroms eines strömenden Mediums durch die Steuer- und/oder Regeleinheit vorgesehen. Vorzugsweise erfolgt ein Ermitteln und/oder separates Auslesen aus dem erfassten Signal durch die Signalaufbereitungseinheit kontinuierlich. Insbesondere erfolgt das Ermitteln und/oder separate Auslesen eines Widerstands, einer Frequenz und/oder eines Spannungs- und/oder Strompegels mittels der, zumindest teilweise als IDC-Chipkarte (Inductance-to-Digital Converter), insbesondere als LDC1000-Chipkarte von Texas Instruments®, ausgebildeten Signalaufbereitungseinheit. Insbesondere wird in zumindest einem Verfahrensschritt mittels der Signalaufbereitungseinheit zumindest nach einer Erfassung des Magnetfelds und zumindest vor einer Bestimmung der Bewegungskenngröße ein erfasstes Signal automatisch in ein digitales Signal umgewandelt. Mittels der erfindungsgemäßen Ausgestaltung kann eine vorteilhaft schnelle Volumenstrommessung erreicht werden.

Die erfindungsgemäße Vorrichtung und/oder das erfindungsgemäße Verfahren zur Volumenstrommessung sollen/soll hierbei nicht auf die oben beschriebene Anwendung und Ausführungsform beschränkt sein. Insbesondere können/kann die erfindungsgemäße Vorrichtung und/oder das erfindungsgemäße Verfahren zur Volumenstrommessung zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Haushalts- und/oder Warmwassergeräts mit einer erfindungsgemäßen Vorrichtung zur Volumenstrommessung eines strömenden Mediums,
- Fig. 2: eine schematische Darstellung einer erfindungsgemäßen Vorrichtung zur Volumenstrommessung eines strömenden Mediums, insbesondere zur Durchführung des erfindungsgemäßen Verfahrens, mit einem Schwebekörper als Messkörper,
- Fig. 3: eine schematische Darstellung eines Ablaufs eines erfindungsgemäßen Verfahrens zur Volumenstrommessung eines strömenden Mediums und
- Fig. 4: eine schematische Darstellung einer erfindungsgemäßen Vorrichtung zur Volumenstrommessung eines strömenden Mediums, insbesondere zur Durchführung des erfindungsgemäßen Verfahrens, mit einem als Flügelrad ausgebildeten Messkörper.

### Beschreibung der Ausführungsbeispiele

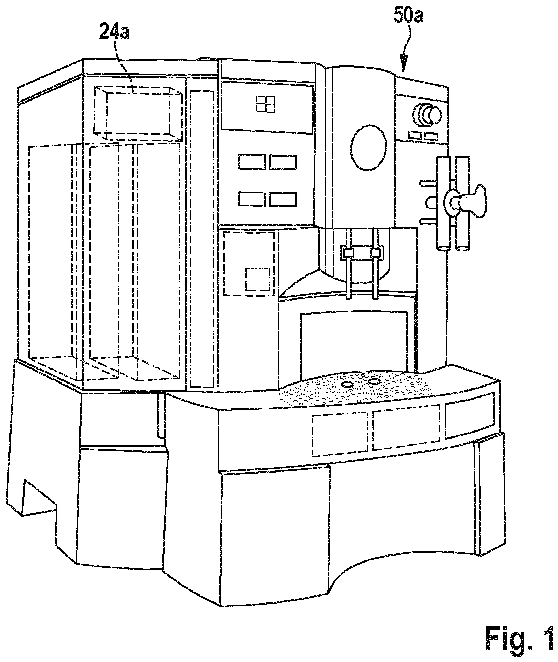

Figur 1 zeigt eine schematische Darstellung eines Haushalts- und/oder Warmwassergeräts 50a mit einer Vorrichtung 24a zur Volumenstrommessung eines strömenden Mediums. Die Vorrichtung 24a zur Volumenstrommessung eines strömenden Mediums ist dazu vorgesehen, über die kontinuierliche Erzeugung und Messung eines Magnetfelds eine Bewegungskenngröße eines Messkörpers in einem Medium zu bestimmen, um zumindest einen Volumenstrom des Mediums zu ermitteln. Das Haushalts- und/oder Warmwassergerät 50a ist beispielhaft als eine Kaffeemaschine ausgebildet. Es ist jedoch denkbar, dass die Vorrichtung 24a in jedem anderen, einem Fachmann bekannten Haushalts- und/oder Warmwassergerät zur Volumenstrommessung eines strömenden Mediums, insbesondere in Showerheatern, verwendet wird.

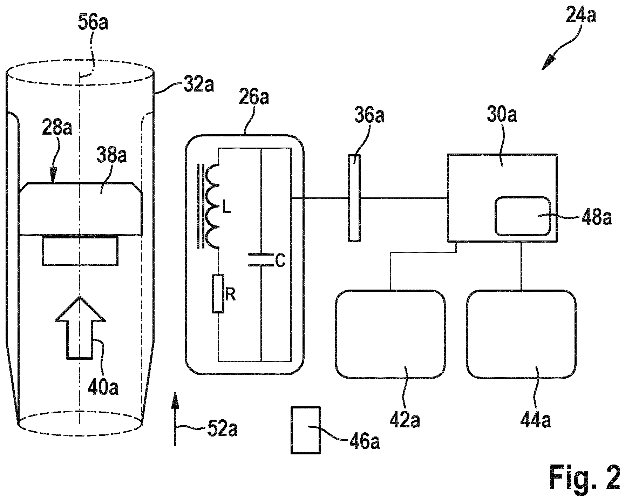

In Figur 2 ist eine schematische Darstellung einer Vorrichtung 24a zur Volumenstrommessung eines strömenden Mediums 40a, insbesondere zu einer Durchführung eines Verfahrens 10a zur Volumenstrommessung, gezeigt. Die Vorrichtung 24a zur Volumenstrommessung ist dazu vorgesehen, kontinuierlich eine Bewegungskenngröße eines Messkörpers 28a in einem vom Medium 40a durchströmten Raum 32a zu bestimmten, insbesondere um zumindest einen Volumenstrom des Mediums 40a zu ermitteln. Die Vorrichtung 24a zur Volumenstrommessung weist einen Volumenstromsensor 26a, einen als Schwebekörper ausgebildeten Messkörper 28a und eine Steuer- und/oder Regeleinheit 30a auf. Der Volumenstromsensor 26a weist einen Schwingkreis zur kontinuierlichen Erzeugung und Erfassung eines Magnetfelds auf, welcher aus einer Spule L, einem Kondensator C und einem Widerstand R gebildet ist. Der Volumenstromsensor 26a und der Schwingkreis des Volumenstromsensors 26a sind in einem Bereich um den vom Medium 40a durchströmten Raum 32a angeordnet. Der Messkörper 28a ist im vom Medium 40a durchströmten Raum 32a angeordnet. Der Schwingkreis des Volumenstromsensors 26a ist in einem Bereich entlang einer Strömungsrichtung 52a des Mediums 40a, in dem der Messkörper 28a angeordnet ist, an und/oder um den vom Medium 40a durchströmten Raum 32a angeordnet. Die Vorrichtung 24a zur Volumenstrommessung umfasst eine als IDC-Chipkarte (Inductance-to-Digital Converter), insbesondere eine LDC1000-Chipkarte von Texas Instruments®, ausgebildete Signalaufbereitungseinheit 36a, die dazu vorgesehen ist, die Signale des Volumenstromsensors 26a in zumindest ein digitales Signal umzuwandeln und nach einer Erfassung des Magnetfelds durch den Volumenstromsensor 26a und zumindest vor einer Bestimmung der Bewegungskenngröße durch die Steuer- und/oder Regeleinheit 30a aus einem erfassten Signal zumindest einen Widerstand, eine Frequenz und/oder einen Spannungs- und/oder Strompegel zu ermitteln und/oder separat auszulesen. Die Steuer- und/oder Regeleinheit 30a ist dazu vorgesehen, über das Ergebnis der Messung kontinuierlich zumindest eine Bewegungskenngröße des Messkörpers 28a zu bestimmen, insbesondere um einen Volumenstrom des Mediums 40a zu ermitteln. Die Steuer- und/oder Regeleinheit 30a umfasst eine Speichereinheit 48a, die dazu vorgesehen ist, das Ergebnis der Messung, zumindest eine über das Ergebnis der Messung mittels der Steuer- und/oder Regeleinheit 30a bestimmte Bewegungskenngröße des Messkörpers 28a und/oder einen über die bestimmte Bewegungskenngröße ermittelten Volumenstrom des Mediums 40a zu speichern. Es ist jedoch auch denkbar, dass die Speichereinheit 48a und die Steuer- und/oder Regeleinheit 30a getrennt ausgebildet sind und kabellos und/oder kabelgebunden miteinander verbunden sind. Die Steuer- und/oder Regeleinheit 30a ist kabellos und/oder kabelgebunden mit dem Volumenstromsensor 26a, einer Ausgabeeinheit 42a, der Signalaufbereitungseinheit 36a und einer Kommunikationseinheit 44a verbunden. Insbesondere ist die als IDC-Chipkarte, insbesondere eine LDC1000-Chipkarte von Texas Instruments®, ausgebildete Signalaufbereitungseinheit 36a funktional und räumlich zwischen dem Volumenstromsensor 26a und der Steuer- und/oder Regeleinheit 30a angeordnet. Insbesondere ist die Steuer-und/oder Regeleinheit 30a, die Ausgabeeinheit 42a, die Signalaufbereitungseinheit 36a und die Kommunikationseinheit 44a auf einer Hauptelektronikplatine der Vorrichtung 24a angeordnet, welche hier jedoch nicht abgebildet ist.

Der Messkörper 28a ist als Schwebekörper ausgebildet. Insbesondere ist die über das Ergebnis der Messung bestimmte Bewegungskenngröße als aufgrund des Volumenstroms des Mediums 40b zurückgelegte Distanz der Struktur 38b des Messkörpers 28b, insbesondere als Schwebehöhe, ausgebildet. Der Messkörper 28a ist mit einer aus einem metallischen Material gebildeten Struktur 38a ausgebildet. Insbesondere ist der Messkörper 28a vollständig aus der aus einem metallischen Material gebildeten Struktur 38a ausgebildet. Es ist jedoch auch denkbar, dass der Messkörper 28a mehrere, aus einem metallischen Material gebildete Strukturen 38a aufweist, die insbesondere jeweils an einem äußeren Rand des Schwebekörpers ausgebildet sind. Der Messkörper 28a und die aus einem metallischen Material gebildete Struktur 38a sind vollständig im vom Medium 40a durchströmten Raum 32a angeordnet. Der Messkörper 28a und die aus einem metallischen Material gebildete Struktur 38a des Messkörpers 28a bewegen sich aufgrund eines Volumenstroms des Mediums 40a vorzugsweise vollständig innerhalb des von dem Medium 40a durchströmten Raums 32a, insbesondere relativ zum Volumenstromsensor 26a. Der als Schwebekörper ausgebildete Messkörper 28a bewegt sich translatorisch aufgrund des Volumenstroms des Mediums 40a entlang einer Bewegungsachse 56a, welche zumindest im Wesentlichen parallel zur Strömungsrichtung 52a ausgerichtet ist. Es ist jedoch auch denkbar, dass sich der Messkörper 28a aufgrund des Volumenstroms des Mediums 40a um die zur Strömungsrichtung 52a zumindest im Wesentlichen parallel angeordnete als Rotationsachse ausgebildete Bewegungsachse 56a dreht und, insbesondere gleichzeitig, eine translatorische Bewegung entlang der Bewegungsachse 56a in Strömungsrichtung 52a ausführt. Die Bewegungsachse 56a ist zumindest im Wesentlichen parallel zu einer Innenwand des vom Medium 40a durchströmten Raums 32a angeordnet. Besonders bevorzugt ist das metallische Material der Struktur 38a unmagnetisch. Es ist jedoch auch denkbar, dass die Struktur 38a aus einem magnetischen Material ausgebildet ist. Insbesondere ist der Abstand zwischen der aus einem metallischen Material gebildeten Struktur 38a des Messkörpers 28a und dem Volumenstromsensor 26a so gewählt, dass das Magnetfeld durch eine minimal zu erwartende Bewegung der aus einem metallischen Material gebildeten Struktur 38a des Messkörpers 28a derart verändert wird, das eine Messung eines dadurch induzierten Signals im Schwingkreis des Volumenstromsensors 26a mittels des Volumenstromsensors 26a vollständig erfasst werden kann. Der vom Medium 40a durchströmte Raum 32a ist als, insbesondere gerades, Rohr ausgebildet. Es sind jedoch auch andere, einem Fachmann bekannte Formen für den vom Medium 40a durchströmten Raum 32a denkbar.

Die Vorrichtung 24a zur Volumenstrommessung weist die Ausgabeeinheit 42a auf, die dazu vorgesehen ist, zumindest das Ergebnis der Messung, die bestimmte Bewegungskenngröße des Messkörpers 28a und/oder den über die bestimmte Bewegungskenngröße ermittelten Volumenstrom des Mediums 40a mittels zumindest eines akustischen, haptischen und/oder visuellen Signal auszugeben. Insbesondere ist die Ausgabeeinheit 42a dazu vorgesehen, das Ergebnis der Messung, die bestimmte Bewegungskenngröße des zumindest einen Messkörpers 28a und/oder den ermittelten Volumenstrom des Mediums 40a mittels zumindest eines akustischen, haptischen und/oder visuellen Signals kontinuierlich auszugeben. Außerdem ist die Ausgabeeinheit 42a dazu vorgesehen, bei einer Über- und/oder Unterschreitung des Grenzwerts zumindest eine akustische, haptische und/oder visuelle Meldung auszugeben, insbesondere um einen Benutzer zu warnen.

Außerdem weist die Vorrichtung 24a zur Volumenstrommessung die Kommunikationseinheit 44a auf, die dazu vorgesehen ist, eine Ausgabe, insbesondere eine Ausgabe der Ausgabeeinheit 42a, auf zumindest eine externe Einheit 46a zu übertragen. Insbesondere ist die Kommunikationseinheit 44a dazu vorgesehen die Vorrichtung 24a mit der externen Einheit 46a kabelgebunden und/oder kabellos zu verbinden. Insbesondere umfasst die Kommunikationseinheit 44a dazu eine Bluetooth-, Infrarot- und/oder Funk-Schnittstelle, welche in Figur 2 nicht gezeigt ist. Es sind aber auch andere, einem Fachmann bekannte Übertragungsarten denkbar. Bevorzugt ist die Kommunikationseinheit 44a dazu vorgesehen, Daten von der Vorrichtung 24a auf die externe Einheit 46a kontinuierlich zu übertragen. Insbesondere ist die Kommunikationseinheit 44a dazu vorgesehen, bei einer Über- und/oder Unterschreitung des Grenzwerts zumindest eine Ausgabe und/oder ein Signal an die externe Einheit 46a zu übertragen, insbesondere um einen Benutzer zu warnen und/oder einen Volumenstrom des Mediums 40a zu begrenzen.

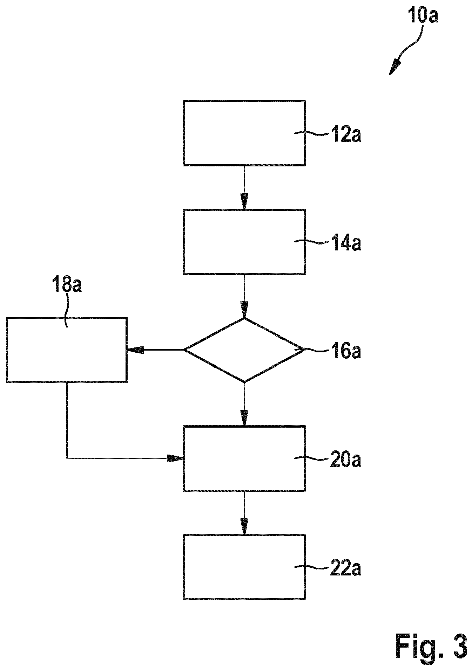

Figur 3 zeigt eine schematische Darstellung eines Ablaufs des Verfahrens 10a zur Volumenstrommessung eines strömenden Mediums 40a. Das Verfahren 10a ist vorzugsweise zur Volumenstrommessung eines strömenden Mediums 40a in Haushalts- und/oder Warmwassergeräten vorgesehen. Das Verfahren 10a zur Volumenstrommessung ist insbesondere dazu vorgesehen, kontinuierlich eine Bewegungskenngröße eines Messkörpers 28a in einem von einem Medium 40a durchströmten Raum 32a zu bestimmen, um zumindest einen Volumenstrom des Mediums 40a zu ermitteln.

Das Verfahren 10a zur Volumenstrommessung eines strömenden Mediums 40a umfasst zumindest einen Verfahrensschritt 12a, in dem mittels des Volumenstromsensors 26a über den Schwingkreis ein Magnetfeld zumindest im Wesentlichen kontinuierlich erzeugt und gemessen wird. In zumindest einem Verfahrensschritt des Verfahrens 10a, insbesondere dem Verfahrensschritt 12a, wird das erzeugte Magnetfeld von der Bewegung der aus einem metallischen Material gebildeten Struktur 38a des Messkörpers 28a in dem von dem Medium 40a durchströmten Raum 32a zumindest signifikant beeinflusst, wobei die Bewegung der aus einem metallischen Material gebildeten Struktur 38a des Messkörpers 28a entlang und/oder um eine Bewegungsachse 56a erfolgt, die zumindest im Wesentlichen parallel zu einer Strömungsrichtung 52a des Mediums 40a ausgerichtet ist. Außerdem wird in zumindest einem Verfahrensschritt des Verfahrens 10a, insbesondere in dem Verfahrensschritt 12a, zumindest nach einer Erfassung des Magnetfelds, ein erfasstes Signal automatisch in ein digitales Signal umgewandelt. In zumindest einem Verfahrensschritt des Verfahrens 10a, insbesondere in dem Verfahrensschritt 12a, wird weiter zumindest nach einer Erfassung des Magnetfelds und zumindest vor einer Bestimmung der Bewegungskenngröße aus einem erfassten Signal mittels zumindest einer Signalaufbereitungseinheit 36a zumindest ein Widerstand, eine Frequenz und/oder ein Spannungs- und/oder Strompegel ermittelt und/oder separat ausgelesen.

Das Verfahren 10a zur Volumenstrommessung umfasst weiter zumindest einen Verfahrensschritt 14a, in dem über das Ergebnis der Messung mittels der Steuer- und/oder Regeleinheit 30a kontinuierlich zumindest eine Bewegungskenngröße des Messkörpers 28a bestimmt wird. Außerdem umfasst das Verfahren 10a zur Volumenstrommessung zumindest einen Verfahrensschritt 16a, in dem das Ergebnis der Messung, die über das Ergebnis der Messung mittels der Steuer- und/oder Regeleinheit 30a bestimmte Bewegungskenngröße des Messkörpers 28a und/oder der über die bestimmte Bewegungskenngröße ermittelte Volumenstrom des Mediums 40a mit zumindest einem in der Speichereinheit 48a hinterlegten vorgegebenen und/oder einstellbaren Grenzwert verglichen wird. Falls eine Über- und/oder Unterschreitung des Grenzwerts ermittelt wird, wird in zumindest einem Verfahrensschritt 18a ein Benutzer mittels der Ausgabeeinheit 42a durch Ausgabe zumindest einer akustischen, haptischen und/oder visuellen Meldung gewarnt. Das Verfahren 10a zur Volumenstrommessung umfasst außerdem zumindest einen Verfahrensschritt 20a, in dem einem Benutzer über die Ausgabeeinheit 42a zumindest das Ergebnis der Messung, die über das Ergebnis der Messung mittels der Steuer- und/oder Regeleinheit 30a bestimmte Bewegungskenngröße des Messkörpers 28a und/oder der über die bestimmte Bewegungskenngröße ermittelte Volumenstrom des Mediums 40a mittels zumindest eines akustischen, haptischen und/oder visuellen Signals ausgegeben wird. Es ist denkbar, dass die Ausgabe in zumindest einem Verfahrensschritt des Verfahrens 10a, insbesondere in dem Verfahrensschritt 20a und/oder dem Verfahrensschritt 18a, mittels der Kommunikationseinheit 44a auf der zumindest einen externen Einheit 46a erfolgt.

Weiter umfasst das Verfahren 10a zur Volumenstrommessung zumindest einen Verfahrensschritt 22a, in dem das Ergebnis der Messung, die bestimmte Bewegungskenngröße des Messkörpers 28a und/oder der über die bestimmte Bewegungskenngröße ermittelte Volumenstrom des Mediums 40a mittels der Steuer- und/oder Regeleinheit 30a auf der Speichereinheit 48a gespeichert wird. Insbesondere wird in zumindest einem Verfahrensschritt des Verfahrens 10a, insbesondere in dem Verfahrensschritt 22a, das Ergebnis der Messung aus dem Verfahrensschritt 12a, die über das Ergebnis der Messung mittels der Steuer- und/oder Regeleinheit 30a bestimmte Bewegungskenngröße des Messkörpers 28a und/oder der über die bestimmte Bewegungskenngröße ermittelte Volumenstrom des Mediums 40a aus dem Verfahrensschritt 14a mittels der Steuer- und/oder Regeleinheit 30a kontinuierlich auf der Speichereinheit 48a gespeichert. Bevorzugt werden im Falle einer kontinuierlichen Speicherung die gespeicherten Daten nach einer bestimmten Zeit und/oder nach Erreichen einer bestimmten Menge an gespeicherten Daten, insbesondere durch die Steuer- und/oder Regeleinheit 30a, von der Speichereinheit 48a gelöscht.

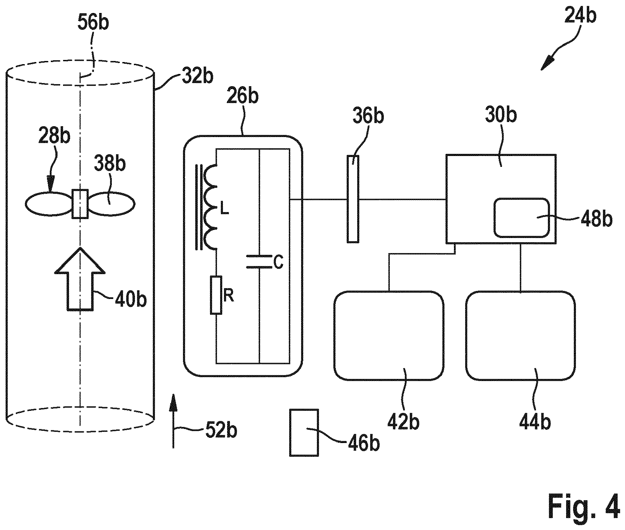

In der Figur 4 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In dem Ausführungsbeispiel der Figur 4 ist der Buchstabe a durch den Buchstaben b ersetzt.

In Figur 4 ist eine schematische Darstellung einer Vorrichtung 24b zur Volumenstrommessung eines strömenden Mediums 40b gezeigt. Die Vorrichtung 24b zur Volumenstrommessung außerhalb eines vom Medium 40b durchströmten Raums 32b ist im Wesentlichen baugleich zur Vorrichtung 24a aus Figur 2. Ein Messkörper 28b mit einer aus einem metallischen Material gebildeten Struktur 38b ist als Flügelrad ausgebildet. Es ist aber auch denkbar, dass der Messkörper 28b als ein anders gearteter Rotationskörper, insbesondere als ein Turbinenrad, ausgebildet ist. Der als Flügelrad ausgebildete Messkörper 28b ist vollständig im vom Medium 40b durchströmten Raum 32b angeordnet und um eine Bewegungsachse 56b beweglich gelagert angeordnet. Die Bewegungsachse 56b ist zumindest im Wesentlichen parallel zur Strömungsrichtung 52b des Mediums 40b ausgerichtet. Vorzugsweise wirkt ein Volumenstrom des Mediums 40b derart auf den als Flügelrad ausgebildeten Messkörper 28b, dass dieser in Rotation um die Bewegungsachse 56b versetzt wird. Eine über das Ergebnis der Messung bestimmte Bewegungskenngröße ist als eine Rotationsgeschwindigkeit und/oder als eine Winkelgeschwindigkeit der Strukturen 38b des Messkörpers 28b ausgebildet. Über die Bewegungskenngröße wird über eine Steuer- und/oder Regeleinheit 30b ein Volumenstrom des Mediums 40b ermittelt.

Es ist denkbar, dass die Vorrichtung 24b mehr als einen als Flügelrad ausgebildeten Messkörper 28b aufweist. Der Messkörper 28b ist mit mehreren aus einem metallischen Material gebildeten Strukturen 38b einstückig ausgebildet, von denen in Figur 4 jedoch nur zwei angedeutet sind. Die aus einem metallischen Material gebildeten Strukturen 38b sind jeweils an einem Flügel des als Flügelrad ausgebildeten Messkörpers 28b angeordnet. Es ist jedoch auch denkbar, dass die Strukturen 38b und der Messkörper 28b jeweils getrennt ausgeformt und miteinander verbunden angeordnet sind. Insbesondere ist denkbar, dass ein als Flügelrad ausgebildeter Messkörper 28b zumindest im Wesentlichen vollständig als eine aus einem metallischen Material gebildete Struktur 38b ausgebildet ist.

## Patentansprüche

1. Vorrichtung zur Volumenstrommessung eines strömenden Mediums mit zumindest einem Volumenstromsensor (26a; 26b) und mit zumindest einem Messkörper (28a; 28b), wobei der Volumenstromsensor (26a; 26b) zumindest einen Schwingkreis zur zumindest im Wesentlichen kontinuierlichen Erzeugung und Erfassung eines Magnetfelds aufweist, wobei der Messkörper (28a; 28b) dazu vorgesehen ist, das Magnetfeld durch zumindest eine Bewegung zumindest signifikant zu beeinflussen, **dadurch gekennzeichnet, dass** der Messköper (28a; 28b) derart angeordnet ist, dass eine Bewegungsachse (56a; 56b) des Messkörpers zumindest im Wesentlichen parallel zu einer Strömungsrichtung (52a; 52b) des Mediums (40a; 40b) ausgerichtet ist.

2. Vorrichtung nach Anspruch 1, **dadurch gekennzeichnet, dass** der Messkörper (28a; 28b) als Schwebekörper und/oder als Flügelrad ausgebildet ist.

3. Vorrichtung nach einem der vorhergehenden Ansprüche, **dadurch gekennzeichnet, dass** zumindest der Volumenstromsensor (26a; 26b) getrennt von einer Steuer- und/oder Regeleinheit (30a; 30b), insbesondere von einer Hauptelektronikplatine, insbesondere an und/oder um den vom Medium (40a; 40b) durchströmten Raum (32a; 32b), angeordnet ist.

4. Vorrichtung nach einem der vorhergehenden Ansprüche, **dadurch gekennzeichnet, dass** der Messkörper (28a; 28b) mit zumindest einer, aus einem metallischen Material gebildeten Struktur (38a; 38b) ausgebildet ist.

5. Vorrichtung nach einem der vorhergehenden Ansprüche, **gekennzeichnet durch** zumindest eine Signalaufbereitungseinheit (36a; 36b), welche zumindest funktional zwischen dem Volumenstromsensor (26a; 26b) und einer Steuer- und/oder Regeleinheit (30a; 30b), insbesondere auf einer Hauptelektronikplatine, angeordnet ist.

6. Verfahren zur Volumenstrommessung eines strömenden Mediums mittels einer Vorrichtung, insbesondere nach einem der vorhergehenden Ansprüche, wobei in zumindest einem Verfahrensschritt (12a) mittels zumindest eines Schwingkreises zumindest eines Volumenstromsensors (26a; 26b) ein Magnetfeld zumindest im Wesentlichen kontinuierlich erzeugt und erfasst wird, wobei in zumindest einem Verfahrensschritt (12a) das erzeugte Magnetfeld durch eine Bewegung von zumindest einer aus einem metallischen Material gebildeten Struktur (38a; 38b) zumindest eines Messkörpers (28a; 28b) zumindest signifikant beeinflusst wird und wobei in zumindest einem Verfahrensschritt (14a) über das Ergebnis einer Messung mittels zumindest einer Steuer und/oder Regeleinheit (30a; 30b) kontinuierlich zumindest eine Bewegungskenngröße zumindest eines Messkörpers (28a; 28b) bestimmt wird, **dadurch gekennzeichnet, dass** die Bewegung der aus einem metallischen Material gebildeten Struktur (38a; 38b) des Messkörpers (28a; 28b) entlang und/oder um eine Bewegungsachse (56a; 56b) erfolgt, die zumindest im Wesentlichen parallel zu einer Strömungsrichtung (52a; 52b) des Mediums (40a; 40b) ausgerichtet ist.

7. Verfahren nach Anspruch 6, **dadurch gekennzeichnet, dass** in zumindest einem Verfahrensschritt (16a) das Ergebnis der Messung und/oder die bestimmte Bewegungskenngröße des Messkörpers (28a; 28b) mit zumindest einem, in einer Speichereinheit (48a; 48b) hinterlegten, vorgegebenen und/oder einstellbaren Grenzwert verglichen wird.

8. Verfahren nach Anspruch 6 oder 7, **dadurch gekennzeichnet, dass** in zumindest einem Verfahrensschritt (20a) über zumindest eine Ausgabeeinheit (42a; 42b) zumindest das Ergebnis der Messung und/oder die bestimmte Bewegungskenngröße des Messkörpers (28a; 28b) mittels zumindest eines akustischen, haptischen und/oder visuellen Signals ausgegeben wird.

9. Verfahren nach Anspruch 7, **dadurch gekennzeichnet, dass** in zumindest einem Verfahrensschritt (18a) bei einer Über- oder Unterschreitung des Grenzwerts mittels zumindest einer Ausgabeeinheit (42a; 42b) zumindest eine akustische, haptische und/oder visuelle Meldung ausgegeben wird, insbesondere um einen Benutzer zu warnen.

10. Verfahren nach Anspruch 8 oder 9, **dadurch gekennzeichnet, dass** eine Ausgabe mittels zumindest einer Kommunikationseinheit (44a; 44b) auf zumindest einer externen Einheit (46a; 46b) erfolgt.

11. Verfahren nach einem der Ansprüche 6 bis 10, **dadurch gekennzeichnet, dass** in zumindest einem Verfahrensschritt (12a) zumindest nach einer Erfassung des Magnetfelds und zumindest vor einer Bestimmung der Bewegungskenngröße aus einem erfassten Signal mittels zumindest einer Signalaufbereitungseinheit (36a; 36b) zumindest ein Widerstand, eine Frequenz und/oder ein Spannungs- und/oder Strompegel ermittelt und/oder separat ausgelesen wird.
